(19)

Europäisches Patentamt

European Patent Office

Office européen des brevets

(11) **EP 4 498 316 A1**

(12) **EUROPEAN PATENT APPLICATION**

(43) Date of publication:
**29.01.2025 Bulletin 2025/05**

(21) Application number: **23188216.8**

(22) Date of filing: **27.07.2023**

(51) International Patent Classification (IPC):
**G06T 1/00** (2006.01)

(52) Cooperative Patent Classification (CPC):
**G06T 1/0028;** G06T 2201/0052; G06T 2201/0061;
G06T 2201/0202

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Irdeto B.V.**
**2132 LS  Hoofddorp (NL)**

(72) Inventors:
• **BARROS, Francisco**
**2132 LS Hoofddorp (NL)**

• **MOMCILOVIC, Svetislav**
**2132 LS Hoofddorp (NL)**
• **SHEVCHENKO, Kostiantyn**
**2132 LS Hoofddorp (NL)**
• **YALCINKAYA, Ozgun**
**2132 LS Hoofddorp (NL)**
• **ZIVKOVIC, Vladimir**
**2132 LS Hoofddorp (NL)**

(74) Representative: **Boult Wade Tennant LLP**
**Salisbury Square House
8 Salisbury Square
London EC4Y 8AP (GB)**

(54) **EMBEDDING INFORMATION IN AN IMAGE**

(57)     A method of embedding information in an initial image, the initial image comprising an array of image elements, the method comprising: obtaining a watermark pattern representative of the information, the watermark pattern comprising an array of watermark elements, each watermark element indicative of a change to be made to a corresponding image element, the watermark pattern forming a plurality of non-overlapping watermark blocks of watermark elements, each watermark block corresponding to an image block of image elements; determining, for each image element that corresponds to a watermark element, a respective threshold indicative of a maximum magnitude of change for that image element; and generating a watermarked image by combining the watermark pattern and the initial image according to the determined thresholds; wherein said determining comprises: for each image block, determining a corresponding masking value indicative of a degree to which that image block is able to mask the corresponding watermark block, based on intra-band and inter-band frequency perceptual masking capabilities of that image block for the corresponding watermark block; based on a target number of blocks, identifying one or more image blocks, said identifying biased towards identifying image blocks that have a higher corresponding masking value than non-identified image blocks; wherein for each image block, the threshold for each image element of said image block is weighted based on whether said image block has been identified, wherein said weighting is arranged to provide a higher threshold for identified image blocks than for non-identified image blocks.

FIGURE 4

EP 4 498 316 A1

**Description**

**Field of the invention**

The present invention relates to methods of embedding information in an image, and systems and computer programs for carrying out such methods.

**Background of the invention**

Digital watermarking of images is very well known - see, for example https://en.wikipedia.org/wiki/Digital_watermarking and "Digital watermarking", Cox et al., Journal of Electronic Imaging 11, no. 3 (2002), both of which are incorporated herein by reference. There are many methods for performing digital watermarking of images but, in general, they all involve adding a watermark pattern to, or combining a watermark pattern with, an image. The watermark pattern represents information (or a watermark payload) that is to be embedded into the original image to form a watermarked image - thus, the watermark payload is embedded (or encoded or represented) within the watermarked image. The watermarked image can then be distributed to one or more users (or recipients or receivers) - the users therefore receive an image with an embedded watermark payload.

The method used for adding a watermark to an image depends on the intended purpose of the watermark. Some watermarking techniques are designed to be "robust", in the sense that the embedded watermark payload can be successfully decoded (or extracted) from the watermarked image even if the watermarked image has undergone subsequent processing (be that malicious or otherwise). Some watermarking techniques are designed to be "fragile", in the sense that the embedded watermark payload cannot be successfully (or completely) decoded (or extracted) from the watermarked image if the watermarked image has undergone subsequent processing or modification. Some watermarking techniques are designed such that the difference between the original image and the watermarked image is substantially imperceptible to a human user (e.g. the original image and the watermarked image are visually indistinguishable to a human user). Other criteria for how a watermark is added to an image exist.

**Summary of the invention**

Embodiments of the invention aim to provide techniques for watermarking images, in which the degree to which a watermark pattern may be combined with an initial image is adjusted so as to improve the (im)perceptibility of the watermark within the resultant watermarked image whilst, at the same time, improving (or not compromising) the robustness of the watermark. This may, alternatively, be viewed as providing techniques for watermarking images, in which the degree to which a watermark pattern may be combined with an initial image is adjusted so as to improve the robustness of the watermark whilst, at the same time, improving (or not compromising) the (im)perceptibility of the watermark within the resultant watermarked image.

According to a first aspect of the invention, there is provided a method of embedding information in an initial image, the initial image comprising an array of image elements, the method comprising: obtaining a watermark pattern representative of the information, the watermark pattern comprising an array of watermark elements, each watermark element indicative of a change to be made to a corresponding image element, the watermark pattern forming a plurality of non-overlapping watermark blocks of watermark elements, each watermark block corresponding to an image block of image elements; determining, for each image element that corresponds to a watermark element, a respective threshold indicative of a maximum magnitude of change for that image element; and generating a watermarked image by combining the watermark pattern and the initial image according to the determined thresholds; wherein said determining comprises: for each image block, determining a corresponding masking value indicative of a degree to which that image block is able to mask the corresponding watermark block, based on intra-band and inter-band frequency perceptual masking capabilities of that image block for the corresponding watermark block; based on a target number of blocks, identifying one or more image blocks, said identifying biased towards identifying image blocks that have a higher corresponding masking value than non-identified image blocks; wherein for each image block, the threshold for each image element of said image block is weighted based on whether said image block has been identified, wherein said weighting is arranged to provide a higher threshold for identified image blocks than for non-identified image blocks.

In some embodiments, for each image block, said corresponding masking is based on values $v_{a,b} = s_a c_b f(a,b)$ for each $(a, b) \in \mathcal{F} \times \mathcal{F}$, where $\mathcal{F}$ is a set of spatial frequencies for the image block, $s_a$ corresponds to the magnitude of the frequency component at frequency $a$ of the corresponding watermark block, $c_b$ corresponds to the magnitude of the frequency component at frequency $b$ of the image block, and $f(a,b)$ is a function indicative of perceptual sensitivity to a change at frequency $a$ in the presence of a signal at frequency $b$ The masking value may be based on an average of the calculated values $v_{a,b}$. Additionally or alternatively, for each image block, determining said corresponding masking value may comprise: performing a discrete cosine transform (DCT) on the corresponding watermark block to generate first frequency coefficients, wherein the set $\mathcal{F}$ of spatial frequencies is the set of spatial frequencies for the DCT, and wherein $s_a$ corresponds to the magnitude of the first frequency coefficient for frequency $a$; and performing the DCT on the image block to generate second frequency coefficients, wherein $c_b$ corresponds to the magnitude of the second frequency coefficient for frequency $b$.

In some embodiments, each identified image block has a higher corresponding masking value than any non-identified image block.

In some embodiments, said identifying one or image blocks comprises performing an iterative process that comprises one or more iterations, wherein each iteration comprises: identifying one or more candidate image blocks for the iteration, each candidate image block being an image block for which the corresponding masking value is greater than a current threshold masking value for the current iteration; in response to the number of candidate image blocks for the iteration meeting the target number, terminating the iterative process, the identified image blocks then being the candidate image blocks for the iteration; in response to the number of candidate image blocks for the iteration not meeting the target number, either decreasing the current threshold masking value and performing another iteration if the current threshold masking value is greater than a minimum threshold masking value, or terminating the iterative process if the current threshold masking value is not greater than the minimum threshold masking value. In some such embodiments, identifying one or more candidate image blocks for the iteration comprises identifying all image blocks that have a higher corresponding masking value than the current threshold masking value. In some such embodiments, the method comprises performing one or more filters or operations based on the identified image blocks that have a higher corresponding masking value than the current threshold masking value, said one or more filters or operations identify one or more further image blocks and/or set one or more already-identified image blocks to no longer be identified. In some such embodiments, the one or more filters or operations comprise a morphological opening operation.

In some embodiments, the target number of blocks is either (a) a target proportion of the image blocks or (b) a target absolute number of image blocks.

In some embodiments, for each identified image block, the threshold for each image element of said image block is weighted based the masking value of that image block

According to a second aspect of the invention, there is provided a system arranged to carry out a method according to the above-mentioned first aspect or any embodiment thereof.

According to a third aspect of the invention, there is provided a computer program which, when executed by one or more processors, causes the one or more processors to carry out a method according to the above-mentioned first aspect or any embodiment thereof. The computer program may be stored on a computer-readable medium.

## Brief description of the drawings

Embodiments of the invention will now be described, by way of example only, with reference to the accompanying drawings, in which:

Figure 1 schematically illustrates an example of a computer system;
Figure 2 schematically illustrates a watermarking system according to some embodiments of the invention;
Figure 3 schematically illustrates an initial image and a watermark pattern according to embodiments of the invention;
Figure 4 is a flowchart illustrating a method of embedding information in an initial image according to embodiments of the invention;
Figure 5 is a flowchart illustrating the processing performed, according to embodiments of the invention, for determining thresholds indicative of maximum magnitudes of change for image elements;
Figure 6 is a flowchart illustrating the processing performed, according to some embodiments of the invention, for identifying, based on a target number of blocks, one or more image blocks so that each identified image block has a higher corresponding masking value than any non-identified image block; and
Figure 7 is a graph representing dependence of a visibility threshold on image background luminance.

## Detailed description of embodiments of the invention

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the broader spirit and scope of the invention as set forth in the appended claims.

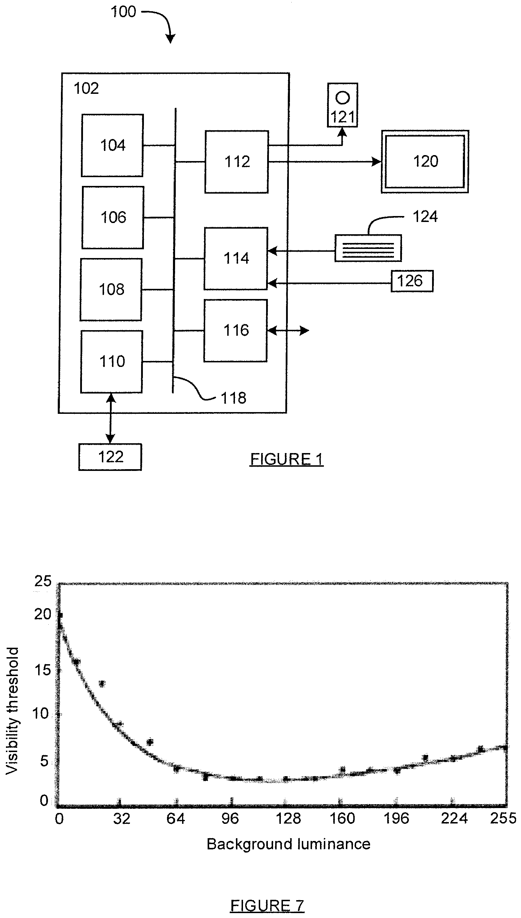

Figure 1 schematically illustrates an example of a computer system 100. The system 100 comprises a computer 102. The computer 102 comprises: a storage medium 104, a memory 106, a processor 108, a device interface 110, a user output interface 112, a user input interface 114 and a network interface 116. Each of these components may be arranged to communicate with one or more of the other components via one or more communication buses 118 of the computer 102.

The storage medium 104 may be any form of non-volatile data storage device such as one or more of a hard disk drive, a magnetic disc, a solid-state-storage device, an optical disc, a ROM, etc. The storage medium 104 may store an operating system for the processor 108 to execute in order for the computer 102 to function. The storage medium 104 may also store one or more computer programs (or software or instructions or code).

The memory 106 may be any random access memory (storage unit or volatile storage medium) suitable for storing data and/or computer programs (or software or instructions or code).

The processor 108 may be any data processing unit suitable for executing one or more computer programs (such as those stored on the storage medium 104 and/or in the memory 106), some of which may be computer programs according to embodiments of the invention or computer programs that, when executed by the processor 108, cause the processor 108 to carry out a method according to an embodiment of the invention and configure the system 100 to be a system according to an embodiment of the invention. The processor 108 may comprise a single data processing unit or multiple data processing units operating in parallel, separately or in cooperation with each other. The processor 108, in carrying out data processing operations for embodiments of the invention, may store data to and/or read data from the storage medium 104 and/or the memory 106.

The device interface 110 may be any unit for providing an interface to a device 122 external to, or removable from, the computer 102. The device 122 may be a data storage device, such as one or more of an optical disc, a magnetic disc, a solid-state-storage device, etc. The device 122 may have processing capabilities - for example, the device 122 may be a smart card. The interface 110 may therefore access data from, or provide data to, or interface with, the device 122 in accordance with one or more commands that it receives from the processor 108.

The user input interface 114 is arranged to receive input from a user, or operator, of the system 100. The user may provide this input via one or more input devices of the system 100, such as a mouse (or other pointing device) 126 and/or a keyboard 124, that are connected to, or in communication with, the user input interface 114. However, it will be appreciated that the user may provide input to the computer 102 via one or more additional or alternative input devices (such as a touch screen). The computer 102 may store the input received from the input devices via the user input interface 114 in the memory 106 for the processor 108 to subsequently access and process, or may pass it straight to the processor 108, so that the processor 108 can respond to the user input accordingly.

The user output interface 112 is arranged to provide a graphical/visual and/or audio output to a user, or operator, of the system 100. As such, the processor 108 may be arranged to instruct the user output interface 112 to form an image/video signal representing a desired graphical output, and to provide this signal to a monitor (or screen or display unit) 120 of the system 100 that is connected to the user output interface 112. Additionally or alternatively, the processor 108 may be arranged to instruct the user output interface 112 to form an audio signal representing a desired audio output, and to provide this signal to one or more speakers 121 of the system 100 connected to the user output interface 112.

Finally, the network interface 116 provides functionality for the computer 102 to download data from and/or upload data to one or more data communication networks. This may be via wired and/or wireless communication.

It will be appreciated that the architecture of the system 100 illustrated in figure 1 and described above is merely exemplary and that other computer systems 100 with different architectures (for example with fewer components than shown in figure 1 or with additional and/or alternative components than shown in figure 1) may be used in embodiments of the invention. As examples, the computer system 100 could comprise one or more of: a personal computer; a server computer; a mobile telephone; a tablet; a laptop; a geographical navigation device; a television set; a set top box; a games console; other mobile devices or consumer electronics devices; etc. Additionally, it is possible that some components of the computer system 100 are not located in the computer 102 and are, instead, part of a computer network connected to the computer 102 via the network interface 116. Additionally or alternatively, the computer system 100 may comprise multiple computers 102, e.g. in a network of computers such as a cloud system of computing resources.

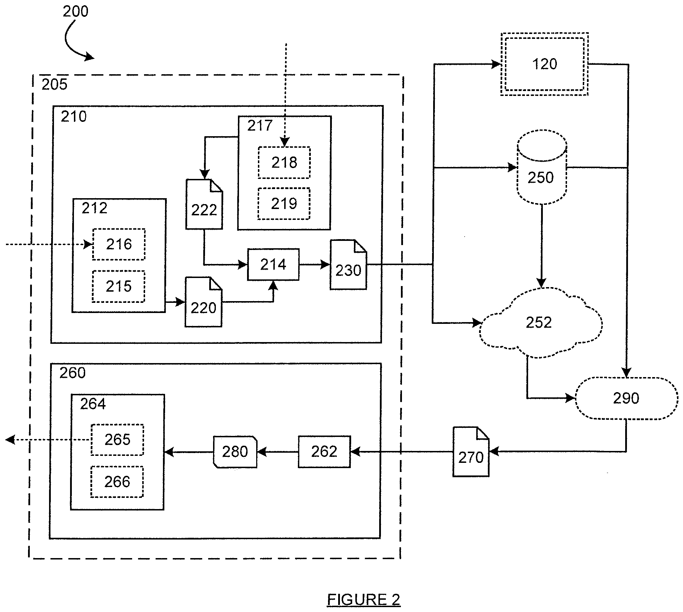

Figure 2 schematically illustrates a watermarking system 200 according to some embodiments of the invention. The watermarking system 200 comprises a watermark embedding system 210 (or a watermark embedder or encoder) and a watermark decoding system 260 (or a watermark detector). The watermark embedding system 210 and the watermark decoding system 260 may take the form of one or more computer systems 100 as shown in figure 1, although it will be appreciated that this is merely an example. Indeed, the watermark embedding system 210 and the watermark decoding system 260 may be implemented on the same computer system 100 and/or may be operated by the same entity and may, therefore, be viewed as a combined watermark embedding and decoding system, as illustrated by a dashed line 205 in figure 2. However, it will be appreciated that the watermark embedding system 210 and the watermark decoding system 260 may be implemented on different computer systems 100 and/or may be operated by different entities and may, therefore, be viewed as separate systems.

The watermark embedding system 210 comprises an image source module 212, an embedding module 214, and a watermark pattern module 217, each of which may be implemented as software executing on, say, a processor 108 of a computer system 100 that is part of (or that forms) the watermark embedding system 210 or as a hardware module of the watermark embedding system 210 or as a combination of both software and hardware. In operation, the image source module 212 is arranged to provide an initial image 220 to the embedding module 214. The embedding module 214 is arranged to combine a watermark pattern 222 provided by, and received from, the watermark pattern module 217 with the initial image 220 received from the image source module 212, to thereby form a watermarked image 230.

In embodiments of the invention, the initial image 220 is an image (which may be a single image, or which may be a frame or a field from a sequence of images, i.e. from a video sequence). Likewise, the watermark pattern 222 may be viewed as an image (or an indication of adjustments or modifications to be made to the initial image 220 in the spatial domain), which the embedding module 214 overlays onto the initial image 220 to thereby generate the watermarked image 230. The adjustments or modifications (as represented by the watermark pattern 222) to be made to the initial image 220 may involve increasing the value of one or more elements (e.g. pixels or colour component values) of the initial image 220 and/or decreasing the value of one or more elements (e.g. pixels or colour component values) of the initial image 220.

As discussed in more detail below, the embedding module 214 sets and applies one or more thresholds/limits (dynamically determined based on the initial image 220) to the modifications made to the initial image 220 when overlaying (or adding or combining) the watermark pattern 222 with the initial image 220 - such thresholds/limits aim to reduce any perceptual differences between the watermarked image 230 and the initial image 220 and/or improve the robustness of the watermark (i.e. increase the likelihood of the watermark being subsequently decodable by the watermark decoding system 260).

Thus, in summary, the watermark embedding system 210 forms a watermarked image 230 from an initial image 220, where the watermarked image 230 comprises (or has embedded therein) a watermark that represents (or embeds or encodes or corresponds to) certain payload data (as represented by the watermark pattern 222).

In some embodiments, the image source module 212 may itself generate some or all of the initial image 220 and may, therefore, comprise an image generator 215. For example, the image generator 215 may comprise one or more cameras. Thus, for example, the watermark embedding system 210 may be a vehicle "dashcam" system comprising one or more cameras that generate video content as the vehicle is being operated, with the embedding module 214 watermarking one or more images 220 of the video content as the video content is captured, to generate watermarked content 230. As another example, the watermark embedding system 210 may be a computer or games console arranged to execute a computer video game, and the image generator 215 may be part of the computer video game that generates video game content, with the embedding module 214 watermarking one or more images 220 of the generated video game content. As another example, the watermark embedding system 210 may form part of, or be executed by, a smartphone or camera, with the embedding module 214 watermarking one or more images 220 captured by the smartphone or camera.

Additionally or alternatively, the image source module 212 may receive the initial image 220 from a source (not shown in figure 2) that is external to the watermark embedding system 210 - thus, the image source module 212 may comprise an input 216 for receiving the initial image 220 from a source. For example, the watermark embedding system 210 may be a computer or games console arranged to execute an online/networked computer video game, and the input 216 may be part of the computer video game arranged to receive video game content generated by a remote/separate server. As another example, the watermark embedding system 210 may provide an online/networked watermarking service to customers (e.g. over the internet), with the customers providing the initial image 220 to the watermark embedding system 210, via a website provided by the input 216.

In some embodiments, the watermark pattern module 217 may itself, be arranged to generate the watermark pattern 222 and may, therefore, comprise a watermark pattern generator 219 for generating the watermark pattern 222. As is well-known in this field of technology, there are many different techniques available for generating a watermark pattern 222, and they shall not, therefore, be described in more detail herein. As mentioned, the watermark pattern 222 represents certain payload information that is to be embedded (or hidden or encoded) in the initial image 220. Such payload data may be predetermined. For example, the watermark embedding system 210 may be a computer or games console arranged to execute a computer video game, and the payload data may be a unique identifier for a particular instance of that computer game (e.g. so as to be able to track unauthorized use of game instances): in some such cases, the unique identifier may be embedded or stored within the computer game software and the watermark pattern generator 219 may be part of the computer game software and arranged to generate the watermark pattern 222 based on the stored unique identifier; alternatively, the watermark pattern 222 may be pre-generated and embedded or stored within the computer game software and the watermark pattern generator 219 may be part of the computer game software and arranged to output/provide the stored watermark pattern 222. In other embodiments, the payload data may be dynamically generated (either by the watermark pattern generator 219 itself, by another part of the watermark embedding system 210, or by some entity external to the watermark embedding system 210). For example, the watermark embedding system 210 may be a computer or games console arranged to execute a computer video game, and the payload data may represent an identifier of a player, an identifier of the computer or games console being used, an IP address for the watermark embedding system 210, configurations/settings/memory contents of the watermark embedding system 210, etc. In such cases, the watermark pattern generator 219 may be part of the computer game software and may be arranged to generate or obtain the dynamic payload data so that the watermark pattern generator 219 can then generate the watermark pattern 222 based on that payload data.

Additionally or alternatively, the watermark pattern module 217 may be arranged to receive the watermark pattern 222 from a source (not shown in figure 2) that is external to the watermark embedding system 210 - thus, the watermark pattern module 217 may comprise an input 218 for receiving the watermark pattern 222 from a source. For example, the watermark embedding system 210 may be a computer or games console arranged to execute an online/networked computer video game, and the input 218 may be part of the computer video game arranged to receive one or more watermark patterns 222 generated by a remote/separate server (e.g. a server that may also be providing the initial image 220).

The watermark embedding system 210 may store the watermarked image 230 in a storage (or memory) 250. The storage 250 may be part of the watermark embedding system 210 or, as shown in figure 2, may be external to the watermark embedding system 210. Additionally or alternatively, the watermark embedding system 210 may communicate (or transmit or provide) the watermarked image 230 to a third party (not shown in figure 2), for example via one or more networks 252. The one or more networks 252 may, for example, comprise one or more of: the internet, wide area networks, local area networks, metropolitan area networks, wireless networks, broadcast networks, telephone networks, cable networks, satellite networks, etc. As shown in figure 2, in some embodiments, the watermark embedding system 210 may store the watermarked image 230 in the storage (or memory) 250, with the watermarked image 230 being subsequently communicated (or transmitted or provided) to a third party (not shown in figure 2), for example via the one or more networks 252. Additionally or alternatively, the watermark embedding system 210 may be arranged to display the watermarked image 230 on a display 120.

The watermark decoding system 260 comprises a watermark decoding module 262 and a results processing module 264, each of which may be implemented as software executing on, say, a processor 108 of a computer system 100 that is part of (or that forms) the watermark decoding system 260 or as a hardware module of the watermark decoding system 260 or as a combination of both software and hardware.

In operation, the watermark decoding module 262 receives (or obtains or inputs) an image 270 to be "tested" (or processed or analysed), referred to herein for simplicity as the test image 270. In practice, the test image 270 will normally be a version of the watermarked image 230. In particular, the test image 270 may be the watermarked image 230 obtained (directly or indirectly) from the watermark embedding system 210, e.g. obtained via the network 252 or from the storage 250, with this being potentially via one or more third parties to whom the watermarked image 230 was initially or subsequently provided. It is possible that the watermarked image 230 may undergo one or more amounts of processing 290 before being provided as an input to the watermark decoding system 260 and, therefore, the test image 270 may not be exactly the same as the watermarked image 230. Such processing 290 could include, for example: data compression; insertion of additional data; deletion of data; changes to data values; format or standards conversion; geometric transformation (such as rotation, stretching, sheer, resizing); addition of noise; etc. Some or all of the processing 290 may be part of a natural process flow for the watermarked image 230 (e.g. compression as part of data communication between different entities). Additionally or alternatively, some or all of the processing 290 may be malicious, in that an attacker may have processed or modified the watermarked image 230 with a view to achieving an unauthorized goal. It is, however, possible that the watermarked image 230 has not undergone any processing 290 before being provided as an input to the watermark decoding system 260 and, therefore, the test image 270 may be the same as the watermarked image 230.

The watermark decoding module 262 then uses a decoding algorithm (corresponding to the watermark encoding/embedding algorithm that was used to generate the watermark pattern 222 and to apply the watermark at the embedding module 214) to try to extract, or decode, embedded information from the test image 270. If the test image 270 provided to the watermark decoding module 262 was not originally a watermarked image, or if the processing 290 performed on the watermarked image 230 so as to arrive at the test image 270 has been sufficiently large/severe so as to make the embedded watermark undecodable, then the watermark decoding module 262 may output a result 280 that indicates that no watermark may be decoded from the test image. Alternatively, if the test image 270 provided to the watermark decoding module 262 is (or is based on) the watermarked image 230, and if the processing 290 (if any) performed on the watermarked image 230 so as to arrive at the test image 270 has not been sufficiently large/severe so as to make the embedded watermark undecodable (in whole or in part), then the watermark decoding module 262 may output a result 280 that indicates, for example, one or more of: (i) a watermark has been detected; (ii) the decoded payload data; (iii) some or all of the decoded payload data (e.g. if only a part of the watermark could be decoded), (iv) etc.

The results processing module 264 may then process the result 280 output/received from the watermark decoding module 262. In some embodiments, the results processing module 264 comprises an output 265 for communicating some or all of the result 280 to a system (not shown in figure 2) external to the watermark decoding system 260. Additionally or alternatively, the results processing module 264 may comprise a module 266 for taking one or more actions at the watermark decoding system 260 responsive to the result (depending on the intended purpose of the watermark itself). For example, if the watermark payload identifies an instance of a computer game that is known to have been involved in unauthorized use/distribution, then the results processing module 264 may be configured to perform one or more actions such as: alerting the rights holder for the computer game; sending instructions to the games console executing the game (or another system, e.g. a games server, participating in a games session) so as to prevent that instance of the game from continued execution; etc.

It will, of course, be appreciated that figure 2 is merely one example of a watermarking system 200, and that embodiments of the invention may be deployed in other watermarking systems, so as to apply a watermark pattern 222 to an initial image 220 so as to generate a watermarked image 230.

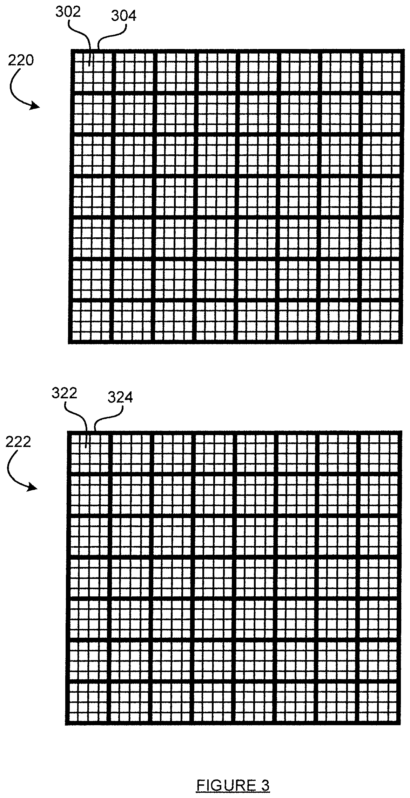

Figure 3 schematically illustrates the initial image 220 and the watermark pattern 222 in more detail, according to embodiments of the invention.

In particular, the initial image 220 comprises an array of image elements 302. The image elements 302 may be pixels (or picture elements) of the initial image 220. For ease of explanation, in the following discussion the initial image 220 has a single colour component (e.g. the initial image 220 is a greyscale image, or the initial image 220 is the luminance component of an image represented as luminance and chrominance components, etc.) - thus, each image element 302 assumes a particular scalar value. However, it will be appreciated that the discussion set out below may be applied equally to initial images 220 with multiple colour components (e.g. by performing the processing on each of those components individually/separately).

As mentioned above, the watermark pattern 222 is representative of information (i.e. the watermark payload). In particular, the watermark pattern 222 comprises an array of watermark elements 322, where each watermark element 322 is (or has a value that is) indicative of a change to be made to a corresponding image element 302. Each watermark element 322 corresponds to its own respective image element 302, different from image elements 302 that correspond to the other watermark elements 322. The watermark elements 322 and their corresponding image elements 302 may be viewed as being arranged in the same pattern/configuration in the watermark pattern 222 and the initial image 220 respectively.

As shown by the thick lines in figure 3, the watermark pattern 222 forms, or comprises, a plurality of non-overlapping watermark blocks 324 of watermark elements 322. The watermark blocks 324 are of size x × y watermark elements 322 - in the example shown in figure 3, the watermark blocks 324 are all square, with $x = y = 4$, but it will be appreciated that they do not need to be square, and that other dimensions for the watermark blocks 324 are possible. In preferred embodiments, $x = y = 8$. As also shown by the thick lines in figure 3, the initial image 220 forms, or comprises, a plurality of non-overlapping image blocks 304 of image elements 302. Due to the watermark elements 322 having corresponding image elements 302, each watermark block 324 corresponds to a respective image block 304 of image elements 302.

Whilst figure 3 shows the watermark pattern 222 as being the same size as the initial image 220 (i.e. the same dimension in terms of watermark elements 322 and image elements 302), this need not be the case. In some embodiments, the watermark pattern 222 may be overlayed onto a sub-region of the initial image 220. However, in such cases, that sub-region may, without loss of generality, equally be viewed as the initial image 220 to be watermarked.

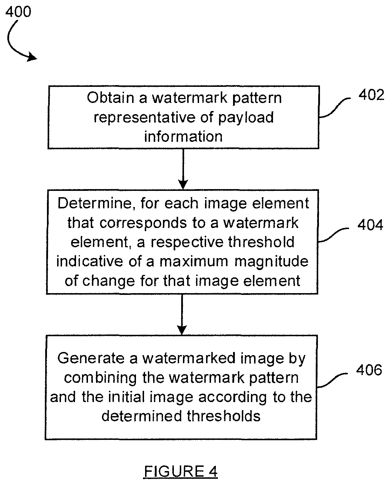

Figure 4 is a flowchart illustrating a method 400 of embedding information in an initial image 220 according to embodiments of the invention.

At a step 402, the watermark pattern module 217 obtains (e.g. generates or receives) the watermark pattern 222, as has been described above with reference to figure 2. As previously mentioned, the watermark pattern 222 may (or may have been) generated using any algorithm/technique for watermark pattern generation for images.

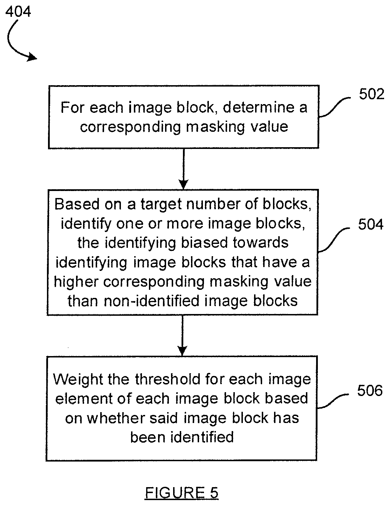

At a step 404, the embedding module 214 determines, for each image element 302 that corresponds to a watermark element 322, a respective threshold indicative of a maximum magnitude of change for that image element 302. Methods for performing the step 404 shall be described shortly with respect to figure 5. This is based on "masking values" for image blocks 304 and a selection mechanism for selecting image blocks 304 (based on their masking values) for which the threshold should be enhanced (or biased to be higher) relative to non-selected image blocks 304. The aim of this is to try to enhance the threshold for image elements 302 of image blocks 304 that are well suited to perceptibly masking their corresponding watermark blocks 324 - this enables the watermark to be embedded more strongly (leading to improved watermark robustness), without compromising image quality (or watermark perceptibility).

At a step 406, the embedding module 214 generates the watermarked image 230 by combining the watermark pattern 222 and the initial image 220 according to the determined thresholds. In particular, consider an image element 302 with value $u$, for which the corresponding watermark element 322 has value $\delta$ and for which the threshold determined at the step 404 has non-negative value T, then the step 406 may comprise setting the value for a corresponding element of the watermarked image 230 to be:

$$\begin{cases} u - T & if \ \delta < -T \\ u + T & if \ \delta > T \\ u + \delta & otherwise \end{cases}$$

In some embodiments, the step 406 may comprise setting the value for a corresponding element of the watermarked image 230 to be:

$$\begin{cases} u - T & if \ \alpha\delta < -T \\ u + T & if \ \alpha\delta > T \\ u + \alpha\delta & otherwise \end{cases}$$

where $\alpha$ is a positive "global strength" factor (to globally scale up, or scale down, the changes indicated by the watermark pattern 222). In some embodiments, $\alpha$ is predetermined (e.g. $\alpha = 1.5$ or $\alpha = 0.9$); in other embodiments, the watermark embedding system 210 may have functionality to allow an operator of the watermark embedding system 210 to set the value of $\alpha$.

It will, of course, be appreciated that values of elements of the watermarked image 230 may be limited by a lower bound and an upper bound (e.g. due to the number of bits in their bit representation), in which case these lower and upper bounds are also applied when combining the watermark pattern 222 and the initial image 220. It will also be appreciated that there may be other factors that are taken into account when applying the thresholds so as to combine the watermark pattern 222 and the initial image 220.

Figure 5 is a flowchart illustrating the processing performed for the step 404 of figure 4 according to embodiments of the invention, i.e. at which the embedding module 214 determines, for each image element 302 that corresponds to a watermark element 322, the respective threshold indicative of a maximum magnitude of change for that image element 302.

Let $k$ denote an index for the image blocks 304 that correspond to watermark blocks 324 according to some ordering for the image blocks 304 (e.g. in a raster scan order within the initial image 220). Let the number of image blocks 304 and corresponding watermark blocks 324 be $N_B$.

At a step 502, the embedding module 214 determines, for each image block 304, a corresponding masking value indicative of a degree to which that image block 304 is able to mask the corresponding watermark block 324, based on intra-band and inter-band frequency perceptual masking capabilities of that image block 304 for the corresponding watermark block 324. Thus, for $k = 1,...,N_B$, a masking value $M_k$ for the $k^{th}$ image block 304 is determined. Examples of how to do this are set out later.

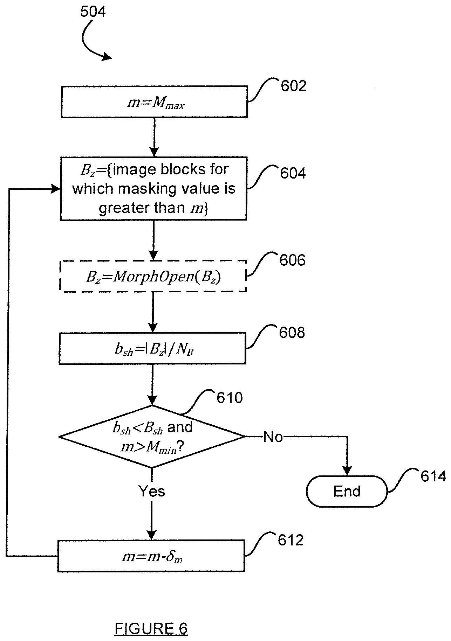

At a step 504, the embedding module 214 identifies, based on a target number $B_{sh}$ of blocks, one or more image blocks 304. The identifying that occurs at the step 504 is arranged, or biased, towards identifying image blocks 304 that have a higher corresponding masking value than non-identified image blocks 304. Whilst it is possible, in some embodiments, that some image blocks 304 identified at the step 504 may have a lower masking value than some non-identified image blocks 304, this should not happen often (e.g. as a result of some additional processing, such as at the step 606 discussed later with respect to figure 6, at which some additional image blocks 304 may be additionally identified). Indeed, in some embodiments, each identified image block 304 has a higher corresponding masking value than any non-identified image block 304. Examples of how to do this are set out later.

At a step 506, for each image block 304, the threshold for each image element 302 of that image block 304 is weighted based on whether that image block 304 has been identified at the step 504. This weighting is arranged to provide a higher threshold for identified image blocks 304 than for non-identified image blocks 304. Examples of how to do this are set out later.

### *Masking value for an image block - step 502*

As mentioned above, the threshold generation at the step 404 is based, at least in part, on "masking values" for image blocks 304. Set out below are examples of how to determine the masking value $M_k$ for the $k^{th}$ image block 304 ($k = 1, ...,N_B$) at the step 502. In general, the masking value $M_k$ for the $k^{th}$ image block 304 ($k = 1, ..., N_B$) is indicative of a degree to which that $k^{th}$ image block 304 is able to mask the corresponding $k^{th}$ watermark block 324, based on intra-band and inter-band frequency perceptual masking capabilities of that $k^{th}$ image block 302 for the corresponding $k^{th}$ watermark block 324.

As a first example, a discrete cosine transformation (DCT) may be performed on both the $k^{th}$ image block 304 and the $k^{th}$ watermark block 324. If the $k^{th}$ image block 304 and the $k^{th}$ watermark block 324 are both of size $W \times H$ elements, then let the DCT coefficients for the $k^{th}$ image block 304 be $C_{k,i,j}$ ($i = 0, ... , W - 1; j = 0, ..., H - 1$) and let the DCT coefficients for the $k^{th}$ watermark block 324 be $S_{k,i,j}$ ($i = 0, ..., W - 1; j = 0, ..., H - 1$).

This first example makes use of normalized magnitudes of the DCT coefficients for the $k^{th}$ watermark block 324, namely:

$$s_{k,i,j} = \frac{\left|S_{k,i,j}\right|}{\left(\frac{1}{N_B}\sum_{n=1}^{N_B}\left|S_{n,i,j}\right|\right)}$$

($k = 1, ...,N_B$; $i = 0, ..., W - 1$; $j = 0, ...,H - 1$).

However, it will be appreciated that this first example could, instead, use non-normalized magnitudes of the DCT coefficients for the $k^{th}$ watermark block 324, namely:

$$s_{k,i,j} = \left|S_{k,i,j}\right|$$

($k = 1, ...,N_B$; $i = 0, ...,W - 1$; $j = 0,...,H - 1$)

In this first example, a sensitivity function f is used, where

$$f(i_m, j_m, i, j) = \begin{cases} 0 & i = j = 0 \\ e^{\frac{-\pi\|i-i_m, j-j_m\|}{\sigma\|i,j\|}} & otherwise \end{cases}$$

The sensitivity function f is a function indicative of (human) perceptual sensitivity to a change at the frequency for DCT subband $(i,j)$ in the presence of a signal at the frequency for DCT subband $(i_m,j_m)$. In this context of watermarking, the sensitivity function f represents the (human) sensitivity of detection (or perception) of the DCT subband $(i,j)$ for a watermark block 324 in the presence of the DCT subband $(i_m,j_m)$ of the corresponding image block 304 - this may be viewed as a measure of how perceptibly suitable the image block's DCT subband $(i_m,j_m)$ is for perceptibly masking/hiding a watermark that changes the block's DCT subband $(i,j)$. Such a sensitivity function allows the computation of the masking values $M_k$ ($k = 1, ..., N_B$) for the image blocks 304 to take into account both inter-band and intra-band masking for the image blocks 304. More information about this sensitivity function $f$ can be found at "Visibility of DCT basis functions: effects of contrast masking", J.A. Solomon et al., Proceedings of IEEE Data Compression Conference, 1994, pages 361-370 (hereinafter Solomon), the entire disclosure of which is incorporated herein by reference. Here, the operator $\|i,j\|$ is a metric representing a distance of the point $(i,j)$ from the point $(0,0)$, e.g. the $\ell^2$-norm, for which $\|i,j\| = \sqrt{i^2 + j^2}$ (although it will be appreciated that other metrics could be used). Thus, $\|i,j\|$ represents a distance of the $(i,j)$ DCT subband from the DC subband in a $W \times H$ grid of DCT coefficients. The constant $\sigma$ may be set experimentally, based on desired visual perceptibility requirements - a suitable value is $\sigma = 2.35$. In some embodiments, $\sigma$ is predetermined (e.g. $\sigma = 2.35$); in other embodiments, the watermark embedding system 210 may have functionality to allow an operator of the watermark embedding system 210 to set the value of $\sigma$. In this first example, the sensitivity function f outputs values in the range $[0,1]$, and has the value 1 when the $(i,j)$ DCT subband and the $(i_m,j_m)$ DCT subband are the same. The higher the value of the sensitivity function f, the better the DCT subband $(i_m,j_m)$ will be at masking, or hiding, a change at the DCT subband $(i,j)$, i.e. such a change will be less perceptible. Thus, the higher the value of the sensitivity function f, the greater the change that can be made to the DCT subband $(i,j)$ without perceptibly affecting the DCT subband $(i_m,j_m)$.

A "masking potential" $\mu_{k,i_m,j_m}$ ($i_m = 0, ..., W - 1$; $j_m = 0, ..., H - 1$) for the $(i_m,j_m)$ DCT subband (or coefficient) of the $k^{th}$ image block 304 may then be defined as:

$$\mu_{k,i_m,j_m} = \frac{1}{HW} \sum_{\substack{i=0,...,W-1 \\ j=0,...,H-1}} \left(s_{k,i,j}f(i_m,j_m,i,j)\right)$$

i.e. $k_{k,i_m,j_m}$ is the average of $s_{k,i,j}f(i_m,j_m,i,j)$ over the coefficients $s_{k,i,j}$ for the $k^{th}$ watermark block 324. Thus, when considering the $(i_m,j_m)$ DCT subband (or coefficient) of the $k^{th}$ image block 304, the coefficient $s_{k,i,j}$ for the $k^{th}$ watermark block 324 receives a weighting $f(i_m,j_m, i,j)$ to emphasise that coefficient's ability to be masked by the $(i_m,j_m)$ DCT subband (or coefficient) of the $k^{th}$ image block 304.

The masking value $M_k$ for the $k^{th}$ image block 304 may then be defined as:

$$M_k = \frac{s_t}{HW} \sum_{\substack{i_m=0,...,W-1 \\ j_m=0,...,H-1}} \left(\mu_{k,i_m,j_m}\left|C_{k,i_m,j_m}\right|\right) = \frac{s_t}{(HW)^2} \sum_{\substack{i,i_m=0,...,W-1 \\ j,j_m=0,...,H-1}} \left(s_{k,i,j}\left|C_{k,i_m,j_m}\right|f(i_m,j_m,i,j)\right)$$

i.e. $M_k$ is the average of $\mu_{k,i_m j_m}|C_{k,i_m,j_m}|$ over the coefficients $C_{k,i_m,j_m}$ for the $k^{th}$ image block 304, optionally multiplied by a positive strength parameter $s_t$. As will become apparent, the strength parameter $s_t$ defines how strongly the watermark may be embedded in a so-called "boosting zone". In practice, the strength parameter $s_t$ defines a balance between robustness of the embedded watermark and the perceptibility of the embedded watermark - the lower the value, the less perceptible the embedded watermark will be (i.e. the image quality of the resultant watermarked image 230 relative to the initial image 220 will be higher), but the robustness of the embedded watermark will be lower (e.g. less "severe" processing 290 may be required in order to make the embedded watermark irrecoverable or undecodable, at least in part). The value of the strength parameter $s_t$ may, therefore, be set dependent on a particular deployment scenario - values in a range between 0 and 10 may be typical, with preferred values around the middle of this range. In some embodiments, $s_t$ is predetermined (e.g. $s_t = 5$); in other embodiments, the watermark embedding system 210 may have functionality to allow an operator of the watermark embedding system 210 to set the value of $s_t$.

It will be appreciated that embodiments of the invention may make use of variations of the above-discussed first example. In particular, other sensitivity functions (indicative of (human) perceptual sensitivity to a change at the frequency for DCT subband $(i,j)$ in the presence of a signal at the frequency for DCT subband $(i_m,j_m)$) could be used instead of the particular sensitivity function $f$ discussed above. Likewise, frequency transformations other than the DCT could be used, such as a Fourier transform or a discrete cosine transform. With such examples, for the $k^{th}$ image block 304 ($k = 1, ..., N_B$), the corresponding masking value $M_k$ is based on values $v_{a,b} = s_a c_b f(a, b)$ for each $(a, b) \in \mathcal{F} \times \mathcal{F}$, where $\mathcal{F}$ is a set of spatial frequencies for the image block 304, $s_a$ corresponds to the magnitude of the frequency component at frequency $a$ of the corresponding watermark block 324, $c_b$ corresponds to the magnitude of the frequency component at frequency $b$ of the image block 304, and $f(a, b)$ is a function indicative of perceptual sensitivity to a change at frequency $a$ in the presence of a signal at frequency $b$. With the above-discussed first example: $\mathcal{F}$ is the set of 2-dimensional spatial frequencies for the $W \times H$ DCT transform; $s_a = S_{k,i,j}$ ($a$ being the frequency for the DCT subband $(i,j)$); $c_b = |C_{k,i_m, j_m}|$ ($b$ being the frequency for the DCT subband $(i_m,j_m)$); and $f(a, b)$ is the above-discussed sensitivity function $f$. The masking value may based on an average of the calculated values $v_{a,b}$. As set out above, the masking value $M_k$ may be determined by: performing a DCT on the corresponding watermark block 324 to generate first frequency coefficients (where the set $\mathcal{F}$ of spatial frequencies is the set of spatial frequencies for the DCT), and wherein $s_a$ corresponds to the magnitude of the first frequency coefficient for frequency $a$; and performing the DCT on the corresponding image block 304 to generate second frequency coefficients (wherein $c_b$ corresponds to the magnitude of the second frequency coefficient for frequency $b$).

It will, however, be appreciated that embodiments of the invention may make use of other methods for determining a masking value $M_k$ indicative of a degree to which the $k^{th}$ image block 304 is able to mask the corresponding $k^{th}$ watermark block 324, based on intra-band and inter-band frequency perceptual masking capabilities of that $k^{th}$ image block 302 for the corresponding $k^{th}$ watermark block 324.

### Boosting zone - step 504

As will be apparent from the discussion above, the masking value $M_k$ for the $k^{th}$ image block 304 indicates a suitability for that image block 304 to mask, or hide or embed, the corresponding watermark block 324 (with this being based on intra-band and inter-band frequency perceptual masking capabilities of those two blocks). Image blocks 304 with a higher masking value are therefore better suited for embedding their respective watermark block 324, i.e. a higher threshold can be set for the magnitude of permissible change to image elements 302 for image blocks 304 with a higher masking value whilst still retaining a degree of (im)perceptibility to a human observer. Therefore, having a higher threshold for the magnitude of permissible change to image elements 302 for image blocks 304 with a higher masking value does not adversely impact on the perceived image quality, but will help improve the robustness of the embedded watermark.

Therefore, as mentioned, at the step 504, the embedding module 214 identifies, based on a target number $B_{sh}$ of blocks, one or more image blocks 304. The identifying that occurs at the step 504 is arranged, or biased, towards identifying image blocks 304 that have a higher corresponding masking value than non-identified image blocks 304. Whilst it is possible, in some embodiments, that some image blocks 304 identified at the step 504 may have a lower masking value than some non-identified image blocks 304, this should not happen often (e.g. as a result of some additional processing, such as at the step 606 discussed later with respect to figure 6, at which some additional image blocks 304 may be additionally identified). Indeed, in some embodiments, each identified image block 304 has a higher corresponding masking value than any non-identified image block 304. The aim is, therefore, to identify a set of image blocks 304 based on the target number $B_{sh}$, where the identified image blocks 304 are (in general) more suitable for masking their corresponding watermark block 324 and are, therefore, (in general) image blocks 304 where the threshold for the magnitude of permissible change to their image elements 302 can be set higher, without compromising visual quality (i.e. visual perceptibility of the watermark) but thereby enhancing watermark robustness. The identified image blocks 304 shall therefore be referred to herein as a "boosting zone".

In some embodiments, the target number $B_{sh}$ of blocks is an actual/absolute target number of image blocks 304 to be identified. In other embodiments, the target number $B_{sh}$ of blocks is a target proportion (or percentage) of the image blocks 304 of the initial image 220. The discussion below is based on the target number $B_{sh}$ of blocks being a target proportion (or percentage) of the image blocks 304 of the initial image 220, but it will be appreciated that this could be easily adapted to apply a target number $B_{sh}$ of blocks that is an actual target number of image blocks 304 to be identified. The higher the value of the target number $B_{sh}$, the more image blocks 304 will be selected for having the modification threshold for their image elements 302 enhanced - this may lead to the watermark being more perceptible in the watermarked image 230, but would also lead to the watermark being more robust. The value of the target number $B_{sh}$ may, therefore, be set dependent on a particular deployment scenario - values in a range between 0.1 and 0.6 may be typical, with preferred values around the middle of this range, e.g. $B_{sh} = 0.3$. In some embodiments, $B_{sh}$ is predetermined (e.g. $B_{sh} = 0.3$); in other embodiments, the watermark embedding system 210 may have functionality to allow an operator of the watermark embedding system 210 to set the value of $B_{sh}$.

Figure 6 is a flowchart illustrating the processing performed for the step 504 of figure 5 according to some embodiments of the invention, i.e. at which, based on the target number $B_{sh}$ of blocks, one or more image blocks 304 are identified, based on the principles set out above.

The example illustrated in figure 6 involves performing an iterative process that comprises one or more iterations, as set out below. Each iteration uses a threshold masking value $m$ for that iteration. Therefore, at a step 602, the current threshold masking value m for the current (first) iteration is initialized to be $m = M_{max}$. $M_{max}$ is an upper bound on a range for testing the masking value for image blocks 304. A suitable value for $M_{max}$ is $M_{max} = 10$. The higher the value of $M_{max}$, the more likely it is that more iterations are performed (i.e. slower overall processing to lead to the same result in some instances). The lower the value of $M_{max}$, the more likely it is that the first iteration will identify substantially more image blocks 304 than the target number $B_{sh}$, so that more image blocks 304 have enhanced thresholds for modifications to their image elements 302 than desired. In some embodiments, $M_{max}$ is predetermined (e.g. $M_{max} = 10$); in other embodiments, the watermark embedding system 210 may have functionality to allow an operator of the watermark embedding system 210 to set the value of $M_{max}$.

At a step 604, one or more candidate image blocks for the iteration are identified. Each candidate image block is an image block 304 for which the corresponding masking value is greater than the current threshold masking value $m$ for the current iteration. Let $B_z$ be the set of identified candidate image blocks.

At an optional step 606, one or more filters or processing may be performed on the set $B_z$ of identified candidate image blocks, to thereby modify which image blocks 304 are, or are not, in the set $B_z$ (e.g. adding more candidate image blocks to the set $B_z$ and/or removing identified candidate image blocks from the set $B_z$). For example, the well-known morphological opening operation may be applied based on the set $B_z$ - more details on the morphological opening operation can be found, for example, at (i) "Mathematical morphology and image analysis", J Serra, Washington DC: SIAM (1982) and (ii) "Efficient dilation, erosion, opening, and closing algorithms", Joseph Yossi Gil et al, IEEE Transactions on Pattern Analysis and Machine Intelligence 24, no. 12 (2002): 1606-1617, the entire contents of each of which is incorporated herein by reference. This use of the morphological opening operation prevents the boosting zone from having isolated image blocks 304 - having isolated image blocks 304 in the boosting zone could make the watermark more perceptible and, therefore, the application of the morphological opening operation helps retain image quality for the watermarked image 230. It will be appreciated that one or more other filters or processing/operations could be performed (additionally or alternatively) at the step 606, which may be aimed at updating the set $B_z$ to help improve watermark (im) perceptibility - for example, one or more image blocks 304 may be removed from the set $B_z$ based on one or more characteristics of those image blocks 304.

At a step 608, the number $b_{sh}$ of candidate image blocks in the set $B_z$ is determined. As mentioned above, embodiments of the invention are being described in which the target number $B_{sh}$ of blocks is a target proportion (or percentage) of the image blocks 304 of the initial image 220 - thus, the number $b_{sh}$ of candidate image blocks is likewise a proportion based on the total number of image blocks 304 of the initial image 220, i.e. $b_{sh} = |B_z|/N_B$. However, if the target number $B_{sh}$ of blocks were an actual target number of image blocks 304 to be identified, then the number $b_{sh}$ of candidate image blocks would be $b_{sh} = |B_z|$.

At a step 610, in response to the number $b_{sh}$ of candidate image blocks for the iteration meeting the target number $B_{sh}$ (e.g. if $b_{sh} \geq B_{sh}$), the iterative process terminates at a step 614. At the step 614, the image blocks 304 identified at the step 504 are, then, the candidate image blocks for this last iteration, i.e. the image blocks 304 in the current set $B_z$.

At the step 610, in response to the number $b_{sh}$ of candidate image blocks for the iteration not meeting the target number $B_{sh}$ (e.g. if $b_{sh} < B_{sh}$), then either (a) if the current threshold masking value m is greater than a minimum threshold masking value $M_{min}$, then processing continues at a step 612 at which the current threshold masking value m is decreased, e.g. reduced by an amount $\delta_m$; or (b) if the current threshold masking value m is not greater than the minimum threshold masking value $M_{min}$, then the iterative process terminates at the step 614. $M_{min}$ is a lower bound on the range for testing the masking value for image blocks 304 - thus, $M_{min} < M_{max}$. A suitable value for $M_{min}$ is $M_{min} = 4$. The higher the value of $M_{min}$, the more likely it is that the iterative process will terminate before reaching the target number $B_{sh}$ of identified image blocks 304 for the boosting zone $B_z$. However, the lower the value of $M_{min}$, the more image blocks 304 will be selected with lower corresponding masking values, so that the likelihood of the watermark being perceptible may then increase. Suitable value for $\delta_m$ are $\delta_m$ = 0.5 or $\delta_m$ = 1 or $\delta_m$ = 2. The higher the value of $\delta_m$, the quicker the iterative process terminates, but more image blocks 304 may be identified for the boosting zone $B_z$ than might have otherwise been identified with a lower value of $\delta_m$ (so that the target number $B_{sh}$ may be exceeded more than if a lower value of $\delta_m$ has been used). In some embodiments, one or both of $M_{min}$ and $\delta_m$ is predetermined (e.g. $M_{min}$ = 4 and/or $\delta_m$ = 1); in other embodiments, the watermark embedding system 210 may have functionality to allow an operator of the watermark embedding system 210 to set the value of one or both of $M_{min}$ and $\delta_m$.

As will be appreciated, a higher value for the strength parameter $s_t$ increases the values of the masking values for the image blocks 304, thereby leading to an increased likelihood of the image blocks 304 being identified for the boosting zone $B_z$.

In some embodiments, at the step 614, an "image complexity" value $I_c$, is calculated. The image complexity $I_c$ is a function of the minimum level of masking value (m for the current/final iteration), for which the target share $B_{sh}$ of the initial image 220 can be embedded, and the resulting share $b_{sh}$ (which might be greater than $M_{min}$). For this, $I_c$ may be calculated using the following expression:

$$I_c = \frac{m}{M_{min}} \times \frac{b_{sh}}{B_{sh}}$$

Effectively, the larger m and $b_{sh}$ are, the stronger and more robust overall embedding may be performed. In the case that the target share $B_{sh}$ is not achieved for $m = M_{min}$, the image complexity $I_c$ will be smaller than 1, and the overall impact of the boosting zone $B_z$ may be decreased (as will be see for some embodiments discussed below in the discussion of the step 506).

Preferably, $W = H = 8$, $\sigma$ = 2.35, $s_t$ = 5, $M_{max}$ = 10, $M_{min}$ = 4 and $\delta_m$ = 1 (or values thereabout), but it will be appreciated that other combinations of values may be used for embodiments of the invention (either predetermined and/or set by a user/operator of the watermark embedding system 210).

It will be appreciated that the step 504 may be performed in different ways from that illustrated in figure 6. For example, the $B_{sh}$ number of image blocks 304 having the highest corresponding masking values may be selected, without performing an iterative process. Such an embodiment may be quicker to perform. However, such embodiments, do not allow for the application of processing at the step 606 so as to reach the target number $B_{sh}$ of image blocks 304 (which can help improve (im)perceptibility of the watermark in the watermarked image 230).

### *Setting thresholds for image elements* - *step 506*

As mentioned above, at the step 506, for each image block 304, the threshold for each image element 302 of that image block 304 is weighted based on whether that image block 304 has been identified at the step 504. This weighting is arranged to provide a higher threshold for identified image blocks 304 than for non-identified image blocks 304. This may be achieved in a variety of ways, as set out below.

For example, a "baseline" positive threshold $T_B$ may be used. The higher the value of $T_B$, the larger the changes that may be made to the image elements 302 of the initial image when applying the watermark pattern 222 so as to generate the watermarked image 230, so that the watermark may be more visible in the watermarked image 230. However, the higher the value of $T_B$, the more robust the watermark is likely to be. The step 506 may comprise setting the threshold T for the modification permissible to an image element 302 to be (a) $T_B$ if that image element 302 is not in an image block 304 identified at the step 504 (i.e. is not in the boosting zone) or (b) $T_B + \delta_T$ if that image element 302 is in an image block 304 identified at the step 504 (i.e. is in the boosting zone), where $\delta_T$ is a positive value. Here, $\delta_T$ may be the same across all image blocks 304 in the boosting zone. Alternatively, $\delta_T$ may not be the same across all image blocks 304 in the boosting zone - for example, $\delta_T$ for an image element 302 may be dependent (e.g. proportional) to the masking value for the corresponding image block 304 (potentially with an maximum value on $\delta_T$ being applied). In some embodiments, one or both of $T_B$ and $\delta_T$ is predetermined (e.g. $T_B$ = 3 and/or $\delta_T$ = 2); in other embodiments, the watermark embedding system 210 may have functionality to allow an operator of the watermark embedding system 210 to set the value of one or both of $T_B$ and $\delta_T$.

Another example makes use of a version of the so-called "just noticeable difference" model, referred to herein as the JND model. More detail on the JND model can be found, for example, at: "Just-noticeable difference estimation with pixels in images", X. Zhang, et al, Journal of Visual Communication and Image Representation, Volume 19, Issue 1, 2008, pages 30-41 (hereinafter Zhang1), and at "Improved estimation for just-noticeable visual distortion", X. Zhang, et al, Signal Processing, Volume 85, Issue 4, 2005, pages 795-808 (hereinafter Zhang2), the entire contents of each of which are incorporated herein by reference. In particular, for the $k^{th}$ image block 304, the following intermediate values may be determined $tDCT_{k,i,j}$, $acm_{k,i,j}$, $alum_k$ (for $k = 1, ..., N_B$; $i = 0, ..., W - 1$; $j = 0, ..., H - 1$). These values will be described in more detail shortly. However, based on these values, the values $tJND_{k,i,j} = tDCT_{k,i,j} acm_{k,i,j} alum_k$ may be determined (for $k = 1, ...,$ $N_B$; $i = 0, ..., W - 1$; $j = 0, ..., H - 1$). An inverse DCT may be applied to the matrix formed by the values $tJND_{k,i,j}$ ($i = 0, ..., W - 1$; $j = 0, ..., H - 1$) to result in the thresholds for the image elements 302 of the $k^{th}$ image block 304 (for $k = 1,..., N_B$).

$tDCT_{k,i,j}$ relates to background luminance contrast sensitivity. The contrast sensitivity relies on the fact that the human visual system (HVS) is sensitive rather to the changes in the background luminance than to the luminance itself - see "Luminance-Model-Based DCT quantization for color image compression", A. J. Ahumada et al, Proceedings Volume 1666, Human Vision, Visual Processing, and Digital Display III (1992) (hereinafter Ahumada), the entire contents of which are incorporated herein by reference. It practically reflects the sensitivity of the eye on the different spatial frequencies in contrast to the background luminance. $tDCT_{k,i,j}$ may be computed, for example, using the methods set out in Ahumada, as well as "Adaptive image coding with perceptual distortion control", Hontsch et al, IEEE Transactions on Image Processing, vol. 11, no. 3, pages 213-222, March 2002 (hereinafter Hontsch), the entire contents of which are incorporated herein by reference - see, for example, the calculation of $tDCT$ in section III of Hontsch.

$alum_k$ reflects the sensitivity of the human eye to different background luminance values. In particular, the eye is less sensitive to a very dark and very bright background luminance. Figure 7 is a graph representing dependence of a visibility threshold on image background luminance. The curve shown in figure 7 can be approximated by the following equation for $alum_k$:

$$alum_k = \begin{cases} k_1 \left(1 - \dfrac{2DC_k}{M}\right)^{\lambda_1} & DC_k \leq M/2 \\ k_2 \left(\dfrac{2DC_k}{M} - 1\right)^{\lambda_2} & otherwise \end{cases}$$

where $M$ represents the maximum value for the image elements 302 (e.g. 255 for 8-bit pixel values), $DC_k$ is the DC coefficient value for the DCT of the $k^{th}$ image block 304 (i.e. the average of the image elements 302 of the $k^{th}$ image block 304) and the parameters are set to $k_1 = 2$, $k_2 = 0.8$, $\lambda_1 = 3$ and $\lambda_1 = 2$ - see, for example, Zhang2.

In order to account for the significance of the background luminance, as well as the imbalance between luminance levels in different displays (especially televisions), in some embodiments the $M/2$ correction factor is replaced with $m_g$, which is the mean of all of the image elements 302 of the initial image 220, in which case:

$$alum_k = \begin{cases} k_1 \left(1 - \dfrac{DC_k}{m_g}\right)^{\lambda_1} & DC_k \leq m_g \\ k_2 \left(\dfrac{DC_k}{m_g} - 1\right)^{\lambda_2} & otherwise \end{cases}$$

It will be appreciated that other ways of setting $alum_k$ to reflect the sensitivity of the human eye to different background luminance values may be used.

In the JND model, $acm_{k,i,j}$ relates to the DCT masking effect according to the general texture and edge characteristics of the image. Embodiments of the invention may set $acm_{k,i,j}$ to be:

$$acm_{k,i,j} = \begin{cases} max\left\{1, \left(\dfrac{C_{k,i,j}}{tDCT_{k,i,j} alum_k}\right)^{0.6}\right\} & (i,j) \neq (0,0) \\ \xi_k & otherwise \end{cases}$$

where the first case (when $(i,j) \neq (0,0)$) corresponds to contrast masking adjustment provided by Hontsch, and in a similar form in Zhang1, Zhang2 and Solomon. In this equation,

$$\xi_k = \begin{cases} max\{1, M_k I_c\} & \left(k^{th} \text{ image block in } B_z\right) \text{ and } \left(k^{th} \text{ image does not have edges}\right) \\ 1 & otherwise \end{cases}$$

The determination of whether the $k^{th}$ image block has edges may be performed in a variety of ways. For example, a downscaled version of the initial image 220, downscaled by a factor of $W \times H$ so that each image block 304 corresponds to a single pixel in the downscaled image, may be generated, and the well-known Canny filter, or Canny edge detector (or any other edge detector) may be applied - pixels in the downscaled version that are identified as being an edge then correspond to image blocks 304 that have edges. Avoiding having a higher value of $\xi_k$ for image blocks 304 that have edges helps avoid the watermark being visually perceptible (and modifications around edges are normally more noticeable to a human observer).

Some embodiments of the invention do not use the condition that *"($k^{th}$ image does not have edges)"* for the calculation of $\xi_k$. Additionally or alternatively, some embodiments of the invention do not use the image complexity $I_c$, so that the maximum function is $max\{1, M_k\}$ (e.g. in embodiments that are not arranged to calculate the image complexity $I_c$).

Additionally or alternatively, some embodiments do not use $tDCT_{k,i,j}$ and/or $alum_k$ when calculating $tJND_{k,i,j}$, e.g. $tJND_{k,i,j} = acm_{k,i,j}$ or $tJND_{k,i,j} = tDCT_{k,i,j}acm_{k,i,j}$ or $tJND_{k,i,j} = acm_{k,i,j}alum_k$.

As will be appreciated, in some of the above-discussed embodiments, for each image block 304 identified at the step 504, the threshold for each image element 302 of that image block 304 is weighted based the masking value of that image block 304 (e.g. if $\delta_T$ is dependent on (such as proportional to) the masking value for the image block 304, or by virtue of $\xi_k$ being based on $M_k$.

It will be appreciated that the methods described have been shown as individual steps carried out in a specific order. However, the skilled person will appreciate that these steps may be combined or carried out in a different order whilst still achieving the desired result.

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or one or more graphical processing units (GPUs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention are implemented by a computer program, then one or more storage media and/or one or more transmission media storing or carrying the computer program form aspects of the invention. The computer program may have one or more program instructions, or program code, which, when executed by one or more processors (or one or more computers), carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, byte code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

## Claims

1. A method of embedding information in an initial image, the initial image comprising an array of image elements, the method comprising:

   obtaining a watermark pattern representative of the information, the watermark pattern comprising an array of watermark elements, each watermark element indicative of a change to be made to a corresponding image element, the watermark pattern forming a plurality of non-overlapping watermark blocks of watermark elements, each watermark block corresponding to an image block of image elements;
   determining, for each image element that corresponds to a watermark element, a respective threshold indicative of a maximum magnitude of change for that image element; and
generating a watermarked image by combining the watermark pattern and the initial image according to the determined thresholds;
wherein said determining comprises:

> for each image block, determining a corresponding masking value indicative of a degree to which that image block is able to mask the corresponding watermark block, based on intra-band and inter-band frequency perceptual masking capabilities of that image block for the corresponding watermark block;
> based on a target number of blocks, identifying one or more image blocks, said identifying biased towards identifying image blocks that have a higher corresponding masking value than non-identified image blocks;
> wherein for each image block, the threshold for each image element of said image block is weighted based on whether said image block has been identified, wherein said weighting is arranged to provide a higher threshold for identified image blocks than for non-identified image blocks.

2. The method of claim 1, wherein, for each image block, said corresponding masking is based on values $v_{a,b} = s_a c_b f(a, b)$ for each $(a, b) \in \mathcal{F} \times \mathcal{F}$, where $\mathcal{F}$ is a set of spatial frequencies for the image block, $s_a$ corresponds to the magnitude of the frequency component at frequency $a$ of the corresponding watermark block, $c_b$ corresponds to the magnitude of the frequency component at frequency $b$ of the image block, and $f(a, b)$ is a function indicative of perceptual sensitivity to a change at frequency $a$ in the presence of a signal at frequency $b$.

3. The method of claim 2, wherein the masking value is based on an average of the calculated values $v_{a,b}$.

4. The method of claim 2 or 3, wherein, for each image block, determining said corresponding masking value comprises:

> performing a discrete cosine transform (DCT) on the corresponding watermark block to generate first frequency coefficients, wherein the set $\mathcal{F}$ of spatial frequencies is the set of spatial frequencies for the DCT, and wherein $s_a$ corresponds to the magnitude of the first frequency coefficient for frequency $a$; and
> performing the DCT on the image block to generate second frequency coefficients, wherein $c_b$ corresponds to the magnitude of the second frequency coefficient for frequency $b$.

5. The method of any one of the preceding claims, wherein each identified image block has a higher corresponding masking value than any non-identified image block.

6. The method of any one of the preceding claims, wherein said identifying one or image blocks comprises performing an iterative process that comprises one or more iterations, wherein each iteration comprises:

> identifying one or more candidate image blocks for the iteration, each candidate image block being an image block for which the corresponding masking value is greater than a current threshold masking value for the current iteration;
> in response to the number of candidate image blocks for the iteration meeting the target number, terminating the iterative process, the identified image blocks then being the candidate image blocks for the iteration;
> in response to the number of candidate image blocks for the iteration not meeting the target number, either decreasing the current threshold masking value and performing another iteration if the current threshold masking value is greater than a minimum threshold masking value, or terminating the iterative process if the current threshold masking value is not greater than the minimum threshold masking value.

7. The method of claim 6, wherein identifying one or more candidate image blocks for the iteration comprises identifying all image blocks that have a higher corresponding masking value than the current threshold masking value.

8. The method of claim 7, comprising performing one or more filters or operations based on the identified image blocks that have a higher corresponding masking value than the current threshold masking value, said one or more filters or operations identify one or more further image blocks and/or set one or more already-identified image blocks to no longer be identified.

9. The method of claim 8, wherein the one or more filters or operations comprise a morphological opening operation.

10. The method of any one of the preceding claims, wherein the target number of blocks is either (a) a target proportion of the image blocks or (b) a target absolute number of image blocks.

11. The method of any one of the preceding claims, wherein for each identified image block, the threshold for each image element of said image block is weighted based the masking value of that image block.

12. A system arranged to carry out a method according to any one of claims 1 to 11.

13. A computer program which, when executed by one or more processors, causes the one or more processors to carry out a method according to any one of claims 1 to 11.

14. A computer-readable medium storing a computer program according to claim 13.

FIGURE 1

FIGURE 7

FIGURE 2

FIGURE 3

400

```
┌─────────────────────────────┐
│   Obtain a watermark pattern │        402
│   representative of payload  │
│         information          │
└─────────────────────────────┘
              │
              ▼
┌─────────────────────────────┐
│ Determine, for each image element │
│   that corresponds to a watermark │   404
│   element, a respective threshold │
│  indicative of a maximum magnitude│
│  of change for that image element │
└─────────────────────────────┘
              │
              ▼
┌─────────────────────────────┐
│  Generate a watermarked image by │
│   combining the watermark pattern │   406
│ and the initial image according to the│
│        determined thresholds      │
└─────────────────────────────┘
```

FIGURE 4

404

For each image block, determine a corresponding masking value — 502

Based on a target number of blocks, identify one or more image blocks, the identifying biased towards identifying image blocks that have a higher corresponding masking value than non-identified image blocks — 504

Weight the threshold for each image element of each image block based on whether said image block has been identified — 506

FIGURE 5

504

$$m = M_{max}$$  602

$$B_z = \{\text{image blocks for which masking value is greater than } m\}$$  604

$$B_z = MorphOpen(B_z)$$  606

$$b_{sh} = |B_z| / N_B$$  608

$$b_{sh} < B_{sh} \text{ and } m > M_{min}?$$  610

No

End  614

Yes

$$m = m - \delta_m$$  612

FIGURE 6

Europäisches
Patentamt

European
Patent Office

Office européen
des brevets

# EUROPEAN SEARCH REPORT

Application Number

EP 23 18 8216

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YAQING NIU ET AL: "A Video-Driven Just Noticeable Distortion Profile for Watermarking", MANAGEMENT AND SERVICE SCIENCE, 2009. MASS '09. INTERNATIONAL CONFERENCE ON, IEEE, PISCATAWAY, NJ, USA, 20 September 2009 (2009-09-20), pages 1-5, XP031557186, ISBN: 978-1-4244-4638-4 * abstract * * page 2, paragraph II.B - page 3, paragraph II.E * | 1,5, 10-14 | INV. G06T1/00 |
| X,D | ZHANG ET AL: "Just-noticeable difference estimation with pixels in images", JOURNAL OF VISUAL COMMUNICATION AND IMAGE REPRESENTATION, ACADEMIC PRESS, INC, US, vol. 19, no. 1, 12 December 2007 (2007-12-12), pages 30-41, XP022387165, ISSN: 1047-3203 * abstract * * page 31, paragraph 2 - page 33, paragraph 3 * | 1,5, 10-14 | |
| A | RAYMOND B WOLFGANG ET AL: "Perceptual Watermarks for Digital Images and Video", PROCEEDINGS OF THE IEEE, IEEE. NEW YORK, US, vol. 87, no. 7, 1 July 1999 (1999-07-01), XP011044240, ISSN: 0018-9219 * abstract * * page 1113, paragraph III.C - page 1116, left-hand column, line 4 * | 1-14 | |

TECHNICAL FIELDS SEARCHED (IPC)

G06T

The present search report has been drawn up for all claims

| Place of search | Date of completion of the search | Examiner |
|---|---|---|
| Munich | 22 January 2024 | Zamuner, Umberto |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **COX et al.** Digital watermarking. *Journal of Electronic Imaging*, 2002, vol. 11 (3)
- **J.A. SOLOMON et al.** Visibility of DCT basis functions: effects of contrast masking. *Proceedings of IEEE Data Compression Conference*, 1994, 361-370
- **J SERRA**. Mathematical morphology and image analysis. *Washington DC: SIAM*, 1982
- **JOSEPH YOSSI GIL et al.** Efficient dilation, erosion, opening, and closing algorithms. *IEEE Transactions on Pattern Analysis and Machine Intelligence*, 2002, vol. 24 (12), 1606-1617

- **X. ZHANG et al.** Just-noticeable difference estimation with pixels in images. *Journal of Visual Communication and Image Representation*, 2008, vol. 19 (1), 30-41
- **X. ZHANG et al.** Improved estimation for just-noticeable visual distortion. *Signal Processing*, 2005, vol. 85 (4), 795-808
- **A. J. AHUMADA et al.** Luminance-Model-Based DCT quantization for color image compression. *Human Vision, Visual Processing, and Digital Display III*, 1992, vol. 1666
- **HONTSCH et al.** Adaptive image coding with perceptual distortion control. *IEEE Transactions on Image Processing*, March 2002, vol. 11 (3), 213-222